(19) Europäisches Patentamt
European Patent Office
Office européen des brevets

(11) **EP 0 941 275 B1**

(12) **EUROPÄISCHE PATENTSCHRIFT**

| | |
|---|---|
| (45) Veröffentlichungstag und Bekanntmachung des Hinweises auf die Patenterteilung: **03.01.2001 Patentblatt 2001/01** | (51) Int Cl.[7]: **C08J 3/12**, C11D 3/37 // C08L67/02 |
| (21) Anmeldenummer: **97913158.8** | (86) Internationale Anmeldenummer: **PCT/EP97/05746** |
| (22) Anmeldetag: **17.10.1997** | (87) Internationale Veröffentlichungsnummer: **WO 98/23668 (04.06.1998 Gazette 1998/22)** |

(54) **VERFAHREN ZUR GRANULIERUNG VON SCHMUTZLÖSENDEN, AMPHIPHILEN POLYMEREN DURCH PRESSAGGLOMERATION**

GRANULATION METHOD FOR DIRT-DISSOLVING, AMPHIPHILIC POLYMERS BY COMPRESSED AGGLOMERATION

PROCEDE DE GRANULATION DE POLYMERES AMPHIPHILES DISSOLVANT LES SALISSURES, PAR AGGLOMERATION PAR COMPRESSION

(84) Benannte Vertragsstaaten:
**AT BE DE ES FR GB IT NL SE**
Benannte Erstreckungsstaaten:
**SI**

(30) Priorität: **27.11.1996 DE 19649119**

(43) Veröffentlichungstag der Anmeldung:
**15.09.1999 Patentblatt 1999/37**

(73) Patentinhaber: **RWE-DEA Aktiengesellschaft für Mineraloel und Chemie 22297 Hamburg (DE)**

(72) Erfinder: **KOCH, Herbert 46348 Raesfeld (DE)**

(74) Vertreter: **Schupfner, Gerhard D., Dr. Dipl.-Chem. Müller, Schupfner & Gauger, Karlstrasse 5 21244 Buchholz (DE)**

(56) Entgegenhaltungen:
**DE-A- 4 336 548       DE-A- 4 441 189**

**Beschreibung**

Die Erfindung betrifft ein Verfahren zur Granulierung von schmutzlösenden, amphiphilen Polymeren durch Preßagglomeration sowie die Verwendung der Granulate zur Herstellung fester Wasch- und Reinigungsmittel.

Die Zusammenstellung von Formulierungen für Wasch- und Reinigungsmittel ist eine komplexe Aufgabe, da die Formulierungen in der Lage sein müssen, Verschmutzungen der verschiedensten Art von sehr unterschiedlichen Oberflächen zu entfernen. Besonders die schnelle und effiziente Entfernung von fettigen oder öligen Anschmutzungen ist im allgemeinen problematisch. Neben den ausschließlich reinigungstechnischen Anforderungen werden die ökotoxikologischen Anforderungen an Formulierungen für Wasch- und Reinigungsmittel immer stringenter.

Zur Schonung der natürlichen Ressourcen gehört jedoch nicht allein die Verwendung von Tensiden auf Basis nachwachsender Rohstoffe, sondern ganz besonders auch die Herstellung von bei gleichbleibendem Rohstoffeinsatz immer wirksameren Formulierungen. Darüber hinaus müssen die immer kompakter werdenden tensidhaltigen Formulierungen für Wasch- und Reinigungsmittel auch bei aus ökologischen Gründen sinkender Wassermenge in der Waschflotte schnell in Wasser löslich sein.

All diese Anforderungen lassen sich nicht mehr allein auf physikalischem Wege erfüllen, sondern erfordern den Einsatz leistungsfähigerer Formulierungen mit neuen, nach Möglichkeit multi-funktionellen Inhaltsstoffen.

Zur Gruppe dieser multifunktionellen Waschmittel-Inhaltsstoffe gehören die sog. "Soil-repellant"- bzw. "Soil-release"-Polymere, zu deutsch, Schmutzlösepolymere.

Als Bestandteil von Formulierungen tragen Schmutzlösepolymere zu einer leichteren Ablösung von Öl- und Fettschmutz bei. Schmutzlösepolymere zeichnen sich dadurch aus, daß sie sowohl hydrophile wie auch hydrophobe Bauelemente besitzen (amphiphile Polymere). Die Wirkungsweise von Schmutzlösepolymeren beruht u.a. auf einer Modifizierung der Faseroberfläche von Polyester- bzw. Baumwoll/Polyestermischgeweben mit Hilfe des hydrophilierenden Polymers. Dabei bewirkt das hydrophile Segment des Schmutzlösepolymers eine leichtere Benetzung der Oberfläche, während das hydrophobe Segment als Ankergruppe fungiert.

Der Feuchtigkeitstransport (Wasserabsorption und Saugfähigkeit) wird bei den mit dem Schmutzlösepolymer behandelten hydrophoben Geweben wie Polyester oder Polyester/Baumwollmischgeweben erheblich verbessert. Außerdem verleihen sie den Stoffen antistatische und Gleiteigenschaften, wodurch die Handhabung dieser Fasern beim Schneiden und Nähen (Textilverarbeitung) erleichtert wird. Die Behandlung der Gewebe mit dem Schmutzlösepolymer ist als eine Art Imprägnierung zu verstehen, d.h. das Schmutzlösepolymer verbleibt für mehrere Waschcyclen auf den Fasern.

Schmutzlösepolymere weisen neben ihren "Soil-Repellent-" bzw. "Soil-Release"-Eigenschaften und ihrem Antiredepositionsvermögen (Inhibierung der Vergrauung) weiterhin oberflächenaktive Eigenschaften auf. Dieser tensidische Charakter (Polymertensid) bewirkt einen Synergismus zu den in der Formulierung eingesetzten Tensiden, wodurch die Waschleistung erheblich gesteigert werden kann. Dem multifunktionellen Charakter der Schmutzlösepolymere ist es zu verdanken, daß die Reinigungswirkung von Formulierungen, die mit diesen Polymeren ausgerüstet werden, erheblich gesteigert werden kann.

Zur wichtigsten Gruppe von Schmutzlösepolymeren gehören Poly- bzw. Oligoester auf Basis von Terephthalsäure/Polyoxyalkylenglykolen/monomeren Glykolen.

Schmutzlösepolymere dieser Gruppe werden schon seit mehreren Jahren vermarktet. Zu den wichtigsten Verkaufsprodukten zählen u.a. ZELCON (Du Pont), MILEASE T (ICI), ALKARIL QCF/QCJ (Alkaril Inc.) und REPEL-O-TEX (Rhone-Poulenc).

Diese Verbindungen bewirken unter anderem, daß sich abgelöste Schmutzstoffe nicht wieder auf dem Gewebe absetzen und somit zu einer Vergrauung führen.

In der deutschen Patentschrift DE 28 57 292 werden Waschmittel beschrieben, die als schmutzabweisende Verbindung ein Polymer aus Ethylenterephthalat und Polyoxyethylenterephthalat sowie anionische ober- bzw. grenzflächenaktive Mittel in Form von nichtethoxylierten Alkoholsulfaten, mit Ethylenoxid kondensierten Alkoholsulfaten und

Gemische davon enthalten.

In der europäischen Patentanmeldung EP 0 365 103 wird eine Tensidzusammensetzung mit einem organischen, nichtionischen Tensid beschrieben, welche 4 bis 30 Gew.-% eines synthetischen, organischen, nichtionischen Tensids, 25 bis 80 Gew.-% Builder, 0,1 bis 2 Gew.-% Protease, 0 bis 2 Gew.-% Amylase, 0,2 bis 1 Gew.-% Cellulase, 1 bis 15 Gew.-% Wasser und als weiteren Bestandteil Poly(alkylenglykolterephthalat) enthält.

Aus den EP-Anmeldungen 0 185 427, 0 241 984, 0 241 985 und 0 272 033 sind Polyesterkondensate von mehrwertigen aromatischen Carbonsäuren mit zweiwertigen Alkoholen und einseitig C1-C4-verschlossenen Polyethern bekannt, die die Schmutzablösung von Polyestergeweben fördern. Diese Polyester besitzen hydrophile Endgruppen, die in den genannten Anmeldungen als Voraussetzung für die schmutzablösenden Eigenschaften der Polyester genannt werden.

Neben dieser Klasse von Schmutzlösepolymeren werden auch Cellulose-Derivate in der Literatur beschrieben. Solche Produkte sind auch kommerziell erhältlich, z.B. als Hydroxyether der Cellulose unter der Produktbezeichnung METHOCEL (Dow).

Zum Einbringen der amphiphilen Polymere in pulverförmige Wasch- und Reinigungsmittel werden verschiedene Verfahren angewendet.

Eine verbreitete Einsatzform sind wäßrige Lösungen bzw. Dispersionen der amphiphilen Polymere, die in die Waschmittelformulierungen eingearbeitet werden. Ein Nachteil dieser Anwendungsform sind die geringen Aktivgehalte der Dispersionen, da die amphiphilen Polymere in wäßriger Lösung sehr stark zum Eindicken neigen, so daß aufgrund der hohen Viskositäten lediglich 20-25%ige Dispersionen verarbeitet werden können. Ein weiterer Nachteil dieser Anwendungsform ist die Hydrolyseempfindlichkeit der Polyester, die bei ihrer Verarbeitung unter alkalischen Bedingungen und erhöhter Temperatur zum Leistungsverlust der Polymere führen.

Eine weitere Möglichkeit zum Einbringen der Polymere in pulverförmige Wasch- und Reinigungsmittel sind Granulate der Polymere mit feinteiligen Trägermaterialen. In DE 44 08 360 wird ein Verfahren zur Herstellung solcher Granulate beschrieben, das dadurch gekennzeichnet ist, daß bei Raumtemperatur feste, schmutzablösevermögende Polymere, welche Ethylenterephthalat- und Polyoxyethylen-terephthalat-Gruppen enthalten, auf eine Temperatur erwärmt, bei welcher die Polymere Viskositäten unter 5000 mPas aufweisen, und die Polymerschmelzen auf das feinteilige Trägermaterial in einem verdichtenden Mischer bei einer Mischungstemperatur, die mindestens so hoch wie die Erweichungstemperatur der Polymere ist, oder auf eine Wirbelschicht des Trägermaterials bei einer Mischungstemperatur, die höchstens so hoch wie die Erweichungstemperatur der Polymere ist, aufgebracht werden.

Eine entscheidende Größe für die Herstellung der Granulate nach diesem Verfahren ist die Schmelzviskosität der eingesetzten Polymere. Um Viskositäten unter 5000 mPas einzustellen, ist es oftmals erforderlich die Polymere auf Temperaturen von 100-120 °C und höher zu erwärmen. Da die Polymere in den meisten Fällen zur Autoxidation neigen, muß die Granulierung unter Schutzgasatmosphäre durchgeführt werden, was einen erhöhten verfahrenstechnischen Aufwand darstellt.

Aufgrund der molekularen Sauerstoffbelegung der feinteiligen Trägermaterialien ist in vielen Fällen eine Autoxidation der Polymere auch unter Verwendung von Schutzgas nicht auszuschließen, was zu einer unerwünschten Verfärbung (Gelbfärbung) der Granulate führt.

In DE 22 49 812 wird ein Verfahren beschrieben, bei dem Mischungen aus amphiphilen Polyestern und extrudierbaren organischen Feststoffen in fester Form miteinander vermahlen werden und die Mischung anschließend extrudiert und gegebenfalls zu einem Granulat geformt wird.

Aus DE 35 31 755 sind Mischungen aus amphiphilen Polyestern und Polycarboxylaten bekannt, die durch Mischen geschmolzener Polyester mit einem Polyacrylat, Abkühlen der Mischung und Zerkleinern des erhaltenen festen Produkts durch kryogene Methoden auf die gewünschte Teilchengröße erhältlich sind. Die Zerkleinerung des Materials wird bei Temperaturen unter 0 °C durchgeführt. Als Kühlmittel hierfür wird flüssiger Stickstoff oder festes Kohlendioxid eingesetzt.

In DE 44 41 189 wird ein Verfahren zur Herstellung von feinteiligen Mischungen aus amphiphilen Polymeren und anorganischen Feststoffen beschrieben, das dadurch gekennzeichnet ist, daß man amphiphile Polymere, deren Erweichungstemperatur oberhalb von 35 °C liegt, und mindestens einen anorganischen Feststoff auf eine Temperatur erhitzt, die oberhalb der Erweichungstemperatur des Polymeren liegt, die Komponenten bei dieser Temperatur durchmischt, die Mischung danach zerteilt und rasch abkühlt, derart, daß praktisch keine Entmischung auftreten kann, und gegebenenfalls die Mischung anschließend bei Temperaturen unterhalb von 50 °C auf Teilchengrößen zerkleinert, die in Waschmitteln üblich sind.

In einer bevorzugten Ausführungsform werden die Polymere bei Temperaturen von 80-200°C mit den anorganischen Trägermaterialien abgemischt und anschließend auf ein Kühlband gefahren. Da die dabei gebildeten Pastillen für den direkten Einsatz in Wasch- und Reinigungsmitteln ungeeignet sind, ist es erforderlich, diese auf die gewünschten Korngrößen, z.B. 50 µm bis 5 mm, zu zerkleinern. Je nach eingesetztem Polymer muß dieser Verfahrensschritt unter kryogenen Bedingungen erfolgen.

Nachteil dieses Verfahrens ist der relativ hohe Energieaufwand, der benötigt wird, um einerseits die Mischung aus Polymerschmelze und anorganischem Trägerstoff von Temperaturen von ca. 140 °C auf unter 10 °C abzukühlen und die dabei gebildeten Pastillen gegebenenfalls unter kryogenen Bedingungen auf die gewünschte Korngröße zu vermahlen.

In der DE 195 06 634 wird ein weiteres Verfahren zur Konfektionierung von amphiphilen Polymeren beschrieben, das sich dadurch auszeichnet, daß man eine wäßrige Dispersion oder kolloidale wäßrige Lösung mindestens eines amphiphilen Polymers und eine wäßrige Lösung eines Polycarboxylats mischt und die so erhältlichen Dispersionen durch Sprühtrocknung zu einer feinteiligen Polymermischung verarbeitet.

Nachteil dieses Verfahrens ist ebenfalls der relativ hohe Energieaufwand, der für den Verfahrenschritt der Sprühtrocknung erforderlich ist.

DE-A-4 336 548 beschreibt ein Verfahren zur Herstellung Kugelförmiger Granulate.

Die meisten den Stand der Technik beschreibenden Verfahren zur Darstellung von pulverförmigen Granulaten von amphiphilen Polymeren haben den Nachteil, daß größere Mengen an Trägersubstanzen benötigt werden, um ein lagerstabiles, leicht rieselfähiges Granulat herzustellen.

Der Erfindung liegt daher die Aufgabe zugrunde, ein Verfahren zur Granulierung von schmutzablösenden, amphiphilen Polymeren zur Verfügung zu stellen, das frei von den Nachteilen der zuvor geschilderten Konfektionierverfahren ist. Weiterhin sollen mit dem erfindungsgemäßen Verfahren Granulate hergestellt werden, die sich durch ein enges Kornspektrum, eine hohe mechanische Festigkeit und somit eine gute Lagerstabilität der Granulate auszeichnen. Weiterhin sollen die Granulate möglichst hohe Aktivgehalte aufweisen und unter normalen Waschbedingungen gut dispergierbar sein.

Die Aufgabe wird erfindungsgemäß mit einem Verfahren zur Granulierung von schmutzlösenden, amphiphilen Polymeren, bei dem mit Hilfe einer sog. Preßagglomeration die bei leichter Erwärmung pastös werdenden amphiphilen Polymere und/oder Mischungen der amphiphilen Polymere mit anorganischen Trägerstoffen in Granulate überführt werden, gelöst.

Gegenstand der Erfindung ist daher ein Verfahren zur Granulierung von schmutzlösenden, amphiphilen Polymeren durch Preßagglomeration. Ein weiterer Gegenstand der Erfindung ist die Verwendung der so hergestellten Granulate zur Herstellung fester Wasch- und Reinigungsmittel.

Vorzugsweise wird das Verfahren der Preßagglomeration auf einer Rund- bzw. Ringmatrizenpresse durchgeführt.

Die Rund- bzw. Ringmatrize rotiert dabei um im Innenraum feststehende Preßrollen (Stator). Aus der Mischtrommel, die der Ringmatrizenpresse vorgeschaltet ist, wird das amphiphile Polymer und/oder Mischungen des Polymers mit anorganischen Trägerstoffen sowie gegebenenfalls sonstigen Additiven mittels einer Förderung in den Innenraum der drehenden Ringmatrize gefördert, wo es von den Preßrollen verdichtet und in die Formkanäle eingewalzt wird. Bei wiederholtem Umlauf der Ringmatrize bilden sich aus den einzelnen Preßlingen Agglomerationsstränge, die aufgrund der einwirkenden Fliehkraft von der drehenden Matrize abreißen.

Durch geeignete Auswahl der Formkanäle in der Ringmatrize kann die für den Waschmittelbereich erforderliche Granulatdicke eingestellt werden. Die zylinderförmigen Granulate können auf eine gewünschte Länge geschnitten werden. Anschließend wird das Granulat auf eine Kühlstrecke gefahren, um die bei der Formgebung ins Produkt eingebrachte Wärme abzuführen. Als Kühlstrecke kann hierbei z. B. ein Wirbelbett fungieren, in dem gleichzeitig eine Sichtung zwischen kompaktiertem Material und Feinanteilen erfolgt. Nicht kompaktiertes Pulver und Produktabrieb können an dieser Stelle abgetrennt und rückgeführt werden.

Die nach dem erfindungsgemäßen Verfahren hergestellten zylinderförmigen Granulate können gegebenfalls abgerundet werden. Zur Abrundung können bekannte Hilfsmittel eingesetzt werden wie z. B. Marumerizer.

Gegebenenfalls können die Granulate oberflächlich abgepudert werden, um ihre Lagerstabilität weiterhin zu verbessern. Zur oberflächlichen Beladung können pulverförmige Zeolithe, insbesondere Zeolith NaA von Waschmittelqualität, Talkum, Kieselsäuren und dergleichen eingesetzt werden.

Weiterhin besteht die Möglichkeit, in der vorgeschalteten Mischertrommel zusätzliche Additive einzubringen, die die Dispergierung der Granulate im Waschprozeß verbessern, wie z. B. Sprengmittel. In der Literatur sind eine Vielzahl von Additiven beschrieben, die die Löslichkeit bzw. Dispergierbarkeit von Granulaten erhöhen. Stellvertretend seien an dieser Stelle Bentonite genannt.

Grundsätzlich bestehen verschiedene Möglichkeiten zum Einbringen des amphiphilen Polymers bzw. Mischungen des amphiphilen Polymers mit anorganischen Trägersubstanzen in den Prozeß der Preßagglomeration.

Ein mögliches Verfahren besteht darin, das im Produktionsprozeß anfallende amphiphile Polymer zu vermahlen (u.U. kryogen) oder grob zu zerkleinern und das pulverförmige Polymer bzw. grob zerkleinerte Polymer in das Formpreßverfahren einzubringen. Hierbei kann das Produkt optional vorab mit Additiven oder anorganischen Trägersubstanzen abgemischt werden. Vorzugsweise versetzt man das gemahlene Polymer mit Additiven, die die Dispergierung der Granulate im Waschprozeß beschleunigen.

Eine weitere Alternative besteht darin, die im Produktionsprozeß anfallende Schmelze eines amphiphilen Polymers auf ein Kühlband zu fahren und hieraus Pastillen herzustellen, die anschließend in dem erfindungsgemäßen Preßagglomerationsverfahren weiterverarbeitet werden. Wie in DE 44 41 189 beschrieben, ist es weiterhin möglich, oberhalb der Erweichungstemperatur des amphiphilen Polymers dieses mit anorganischen Trägersubstanzen zu vermischen, die Schmelze zu zerteilen, z. B. mit Hilfe eines Kühlbandes, und durch rasches Abkühlen auf eine Temperatur, bei der praktisch keine Entmischung auftreten kann, Pastillen herzustellen, die wiederum dem Preßagglomerationsverfahren zugeführt werden.

Neben einer Pastillierung kann die Schmelze eines amphiphilen Polymers auch z. B. mit Hilfe einer Kühlwalze in Schuppen überführt werden, die wiederum im erfindungsgemäßen Agglomerationsschritt eingesetzt werden.

Eine weitere Möglichkeit besteht darin, eine Schmelze eines amphiphilen Polymers direkt bzw. nach Abmischung mit anorganischen Trägersubstanzen und/oder sonstigen Additiven einem Preßagglomerationsprozeß zuzuführen.

Besonders geeignet für den erfindungsgemäßen Verfahrensschritt der Preßagglomeration sind amphiphile Polymere, die leicht wasserdispergierbar und außerdem leicht plastifizierbar sind. Die thermoplastische Verarbeitbarkeit der amphiphilen Polymere bzw. ihrer Mischungen mit Trägersubstanzen und/oder sonstigen Additiven spielt hierbei eine entscheidende Rolle.

In diesem Zusammenhang eignen sich in besonderem Maße amphiphile Polyester, die als Einheiten Terephthalsäuregruppen enthalten. Besonders bevorzugt sind dabei Polyester, die Einheiten von (a) Ethylenterephthalat und (b) Polyoxyethylenterephthalat von Polyethylenglykolen mit Molmassen ($M_W$) von 500-10 000 enthalten.

Amphiphile Polymere dieser Art sind Gegenstand einer Reihe von Veröffentlichungen.

DE-A-14 69 403 beschreibt ein Verfahren zur oberflächenverändernden Behandlung von aus Polyestern abgeleiteten Artikeln. Dabei sind die hergestellten Polyester aus Ethylenterephthalat-Einheiten (ET) aufgebaut mit ET : POET = 2 - 6 : 1, wobei Polyethylenglykole mit (gewichtsmittleren) Molmassen von 1000 - 4000 eingesetzt werden (POET-Polyoxyethylenterephthalat).

In US-A-4 427 557 und EP-A-0 066 944 werden anionische Modifikationen der o.g. Polyester beschrieben, die als eine weitere Polymerisationskomponente das Natriumsalz der Sulfoisophthalsäure beinhalten. Die polymerisierten Polyethylenglykole (PEG) besitzen Molmassen von 200 - 1000 und ergeben nach ihrer Polymerisation mit Ethylenglykol (EG) und Terephthalsäure Polyester mit Molmassen von 2000 - 10 000.

US-A-3 959 230 beansprucht ET/POET-Polyester mit ET : POET = 25 : 75 - 35 : 65, wobei niedermolekulare Polyethylenglykole mit Molmassen von 300 - 700 eingesetzt werden und die gewonnenen Polyester Molmassen von 25 000 - 55 000 aufweisen.

In EP-A-0 253 567 und EP-A-0 357 280 werden im besonderen auch endgruppenverschlossene Polyester (capped polyesters) beschrieben, die zum einen durch nichtionische Gruppen wie z.B. C1 - C4-Alkyl, C1 - C4-Hydroxylalkyl, C1-C4-Acyl als auch durch ionische Succinatgruppen verschlossen werden.

Eine weitere Klasse von bevorzugt in Betracht kommenden amphiphilen Polymeren sind aus der DE-Anmeldung P 196 20 094 bekannte Polyester. Hier werden schmutzabweisende, amphiphile Polymere beschrieben, die durch folgende empirische Formel dargestellt werden können:

$$(CAP)_x(T)_z(I)_q(CAR)_r(DEG)_s(En)_t(A)_y(EG/PG)_v \qquad (I)$$

in der

(CAP) Endgruppen repräsentiert, die das Polymer am Ende verschließen und

    a.) Sulfoaroylgruppen,

    b.) Gruppen mit der Formel $MO_3\text{-}S\text{-}(O)_u\text{-}(CH_2)_p\text{-}(RO)_v\text{-}$, in der M für ein Metallatom und R für Ethylen oder Mischungen von Ethylen und Propylen, u für 0 oder 1, p für 0 oder 1 und v für eine Zahl von 1 bis 100 stehen,

    c.) Poly(oxyethylen)monoalkylether-Gruppen, in denen die Alkylgruppe 1 bis 24 C-Atome enthält und die Polyoxyethylengruppe aus 2 bis 200 Oxyethyleneinheiten besteht,

    d.) Acyl- und Aroylgruppen mit 4 bis 40 Kohlenstoffatomen,

    e.) Hydroxyacyl- und Hydroxyaroylgruppen mit 2 bis 25 Kohlenstoffatomen

    f.) Poly(oxyalkylen)monoalkylphenolether, in denen die Alkylgruppe 6 bis 18 Kohlenstoffatome enthält und die Polyoxyalkylengruppe aus 0 bis 80 Oxyalkyleneinheiten besteht, oder

    g.) Mischungen davon,

sind

und x für Werte von 0 bis 2,

(T) für eine Arylendicarbonylgruppe und z für eine Zahl von 1 - 50,

(I) für eine interne anionische Gruppe und q für eine Zahl von 0 bis 30,

(CAR) für eine Carbonylgruppe einer Carbonateinheit und r für eine Zahl von 1 bis 80,

(DEG) für Di(oxyethylen)oxy und s für eine Zahl von 1 bis 80,

(En) für eine Poly(oxyalkylen)oxy-Gruppe, die aus 2 bis 100 Oxyalkylengruppen aufgebaut ist, wobei t eine Zahl von 0 - 25 bedeutet und die Alkylgruppen 2 bis 6 C-Atome enthalten,

(A) für eine l,n-Alkylendicarbonyl-Gruppe, die aus 2 bis 24 C-Atomen aufgebaut ist, und y für eine Zahl von 0 bis 15,

(EG/PG) für eine Oxyethylenoxy- oder Oxypropylenoxy-Gruppe oder Mischungen davon und y für eine Zahl von 0 bis 80

steht, und wobei die Oligo-/Polyester Molmassen von 500 bis 100 000 besitzen.

Die oben beschriebenen carbonat-modifizierten, amphiphilen Polymere zeichnen sich durch gute Dispergierbarkeit in der Waschflotte sowie gute thermoplastische Verarbeitbarkeit aus, so daß sie besonders für eine Granulierung nach dem erfindungsgemäßen Verfahren geeignet sind.

Neben den beschriebenen Polyesterverbindungen eignen sich u.a. auch amphiphile Polymere, die z. B. durch Pfropfen von Acrylsäureestern, Methacrylsäureestern, Vinylacetat und/oder Vinylpropionat auf wasserlöslichen Polyalkylenglykolen erhältlich sind.

Als anorganische Feststoffe werden vorzugsweise solche eingesetzt, die Bestandteile aktueller Waschmittelformulierungen darstellen. Beispiele hierfür sind Carbonate, Sulfate, Silikate, Borate oder Phosphate von Alkalimetallen und/oder Erdalkalimetallen, Zeolithe, Kieselsäure oder Mischungen der genannten Verbindungen. Geeignete Silikate sind z. B. Zeolithe oder Schichtsilikate sowie amorphe Silikate und gefällte Kieselsäuren. Besonders bevorzugt sind Zeolithe, Natriumcarbonat und Natriumsulfat.

Die nach dem erfindungsgemäßen Verfahren hergestellten Granulate weisen eine hohe mechanische Stabilität auf. Sie sind lagerstabil und zeichnen sich durch eine Gleichförmigkeit der Granulatpartikel aus. Mit dem erfindungsgemäßen Verfahren gelingt es, Granulate herzustellen, die einen hohen Aktivgehalt aufweisen und trotzdem nach längerer Lagerung ohne Schwierigkeiten weiterverarbeitet werden können.

Die nach dem erfindungsgemäßen Verfahren hergestellten Granulate werden beispielsweise zur Herstellung moderner Wasch- und Reinigungsmittel verwendet.

## Patentansprüche

1. Verfahren zur Granulierung von schmutzlosenden, amphiphilen Polymeren oder Mischungen aus mindestens einem schmutzlosenden, amphiphilen Polymer und mindestens einem anorganischen Feststoff durch Preßagglomeration.

2. Verfahren nach Anspruch 1,
   dadurch gekennzeichnet,
   daß man ein oder mehrere schmutzlosende Polymere ohne Zusatz eines anorganischen Feststoffs granuliert.

3. Verfahren nach Anspruch 1,
   dadurch gekennzeichnet,
   daß 0,5 bis < 100 Gew.-% mindestens eines schmutzlosenden, amphiphilen Polymers und > 0 bis 99,1 Gew.-% mindestens eines anorganischen Feststoffs der Preßagglomeration unterworfen werden.

4. Verfahren nach Anspruch 1 oder 2,
   dadurch gekennzeichnet,
   daß die Preßagglomeration in einer Rund- oder Ringmatrizenpresse durchgeführt wird.

5. Verfahren nach Anspruch 1 oder 2,
   dadurch gekennzeichnet,
   daß als amphiphile Polymere Polyester eingesetzt werden, die Terephthalsäureeinheiten enthalten.

6. Verfahren nach Anspruch 1 oder 2,
   dadurch gekennzeichnet,
   daß die eingesetzten Polyesterverbindungen Einheiten von a) Ethylenterephthalat und b) Polyoxyethylenterephthalat von Polyethylenglykolen mit Molmassen $M_w$ von 500 - 10 000 enthalten.

7. Verfahren nach Anspruch 1 oder 2,
   dadurch gekennzeichnet,
   daß der Mischung aus amphiphilen Polymeren und/oder aus amphiphilen Polymeren und anorganischen Feststoffen weitere Additive zugeschlagen werden, die die Dispergierung der Granulate im Waschprozeß verbessern.

**8.** Verfahren nach Anspruch 1,
dadurch gekennzeichnet,
daß man anorganische Feststoffe einsetzt, die üblicherweise Bestandteil pulverförmiger Wasch- und Reinigungsmittel sind.

**9.** Verfahren nach Anspruch 1 oder 2,
dadurch gekennzeichnet,
daß die erhaltenen zylinderförmigen Granulate während oder nach der Granulierung abgerundet werden.

**10.** Verwendung der nach einem der Ansprüche 1 bis 9 erhaltenen schütt- und rieselfähigen granularen Waschmittelbestandteile zur Herstellung fester, insbesondere pulverförmiger Wasch- und Reinigungsmittel sowie Wäschenachbehandlungsmittel.

**Claims**

**1.** A method of granulating amphiphilic soil release polymers or mixtures of at least one amphiphilic soil release polymer and at least one inorganic solid by press agglomeration.

**2.** The method as claimed in claim 1, characterized in that one or more soil release polymers are granulated without the addition of an inorganic solid.

**3.** The method as claimed in claim 1, characterized in that from 0.5 to < 100% by weight of at least one amphiphilic soil release polymer and from > 0 to 99.5% by weight of at least one inorganic solid are subjected to the press agglomeration.

**4.** The method as claimed in claim 1 or claim 2, characterized in that the press agglomeration is carried out in a circular or annular die press.

**5.** The method as claimed in claim 1 or claim 2, characterized in that the amphiphilic polymers employed are polyesters comprising terephthalic acid units.

**6.** The method as claimed in claim 1 or claim 2, characterized in that the polyester compounds employed comprise units of a) ethylene terephthalate and b) polyoxyethylene terephthalate of polyethylene glycols having molar masses $M_w$ of 500 - 10 000.

**7.** The method as claimed in claim 1 or claim 2, characterized in that further additives are added to the mixture of amphiphilic polymers and/or of amphiphilic polymers and inorganic solids, these additives improving the dispersion of the granules in the washing process.

**8.** The method as claimed in claim 1, characterized in that inorganic solids are employed that are customarily a constituent of powdery detergents and cleaning agents.

**9.** The method as claimed in claim 1 or claim 2, characterized in that the cylindrical granules obtained are rounded during or after granulation.

**10.** The use of pourable and free-flowing granular detergent constituents obtained as claimed in any one of claims 1 to 9 for producing solid, especially powdery, detergents and cleaning agents and also laundry aftertreatment compositions.

**Revendications**

**1.** Procédé de granulation de polymères amphiphiles dissolvant les salissures ou de leurs mélanges à partir d'au moins un polymère amphiphile dissolvant les salissures et d'au moins un solide inorganique, par agglomération par compression.

**2.** Procédé selon la revendication 1, caractérisé en ce que l'on granule un ou plusieurs polymères dissolvant les salissures sans ajouter un matériau support inorganique.

3. Procédé de granulation selon la revendication 1, caractérisé en ce qu'une proportion de 0,5% < 100% en poids d'au moins un polymère amphiphile dissolvant les salissures et une proportion > 0 à 99,5% en poids d'au moins un solide inorganique sont soumises à l'agglomération par compression.

4. Procédé selon la revendication 1, caractérisé en ce que l'agglomération par compression est réalisée dans une presse à matricer annulaire ou ronde.

5. Procédé selon la revendication 1, caractérisé en ce que l'on utilise comme polymères amphiphiles des polyesters qui contiennent des unités d'acide téréphtalique.

6. Procédé selon la revendication 1, caractérisé en ce que les composés de polyesters utilisés contiennent des unités de a) téréphtalate d'éthylène et de b) poly(téréphtalate d'oxyéthylène) de polyéthylèneglycols ayant des masses moléculaires $M_w$ de 500-10 000.

7. Procédé selon la revendication 1, caractérisé en ce qu'on ajoute au mélange de polymères amphiphiles et/ou de polymères amphiphiles et de substances véhiculaires inorganiques d'autres additifs qui améliorent la dispersion des granulés dans le processus de lavage.

8. Procédé selon la revendication 1, caractérisé en ce que l'on utilise des solides inorganiques qui sont usuellement des composants d'agents de lavage et de nettoyage pulvérulents.

9. Procédé selon la revendication 1, caractérisé en ce que les granulés cylindriques obtenus sont arrondis pendant ou après la granulation.

10. Utilisation des constituants d'agents de lavage granulaires déversables et coulants contenus selon l'une quelconque des revendications 1 à 9 pour la fabrication d'agents de lavage et de nettoyage solides, en particulier pulvérulents, ainsi que d'agents de post-traitement de lavage.